(19) Europäisches Patentamt
European Patent Office
Office européen des brevets

(11) Veröffentlichungsnummer : **0 192 945**
**B1**

(12) # EUROPÄISCHE PATENTSCHRIFT

(45) Veröffentlichungstag der Patentschrift : **28.09.88**

(51) Int. Cl.⁴ : **C 08 G 77/42**, C 08 G 77/46, C 08 G 63/68

(21) Anmeldenummer : **86100601.3**

(22) Anmeldetag : **17.01.86**

(54) **Neue Polysiloxanblockcopolymere.**

(30) Priorität : **30.01.85 DE 3502928**

(43) Veröffentlichungstag der Anmeldung : **03.09.86 Patentblatt 86/36**

(45) Bekanntmachung des Hinweises auf die Patenterteilung : **28.09.88 Patentblatt 88/39**

(84) Benannte Vertragsstaaten : **DE FR GB IT NL**

(56) Entgegenhaltungen :
**US-A- 3 701 815**
**US-A- 3 935 154**
**MACROMOLECULES, Band 14, Nr. 3, Juni 1981, Seiten 677-683, American Chemical Society, Washington, US; M. GALIN et al.: "Structural and thermodynamic study of dimethylsiloxane-ethylene oxide PDMS-PEO-PDMS triblock copolymers"**
**MACROMOLECULES, Band 10, Nr. 6, November/Dezember 1977, Seiten 1197-1199, Washington, US; J.J. O'MALLEY et al.: "Synthesis and characterization of poly(hexamethylene sebacate)-poly(dimethylsiloxane) block copolymers"**

(73) Patentinhaber : **BAYER AG**
**Konzernverwaltung RP Patentabteilung**
**D-5090 Leverkusen 1 Bayerwerk (DE)**

(72) Erfinder : **Eichenauer, Herbert, Dr.**
**Goethestrasse 71**
**D-4047 Dormagen 1 (DE)**
Erfinder : **Lindner, Christian, Dr.**
**Riehler-Strasse 200**
**D-5000 Köln 60 (DE)**
Erfinder : **Ott, Karl-Heinz, Dr.**
**Paul-Klee-Strasse 54**
**D-5090 Leverkusen 1 (DE)**
Erfinder : **Orth, Peter, Dr.**
**Auerstrasse 1**
**D-5000 Köln 60 (DE)**
Erfinder : **Höcker, Hartwig, Prof. Dr.**
**Wacholderstrasse 12**
**D-8581 Eckersdorf (DE)**

**EP 0 192 945 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Blockcopolymere aus wieder-kehrenden Struktureinheiten aus der Reihe der Polysiloxane und wiederkehrenden Struktureinheiten aus der Reihe der aliphatischen Polyester, Polyether oder Polyetherester mit Kautschukeigenschaften, wobei die die polymeren Blöcke bildenden Polymere jeweils für sich selbst kautschukartige Produkte darstellen, also Produkte mit Glasübergangstemperaturen unterhalb von praktischen Gebrauchstemperaturen.

Verschiedenartige Blockcopolymere sind bekannt, z. B. Styrol-Butadien-Blockcopolymere, Blockcopolymere aus aliphatischen Polyestern oder Polyethern und Polyestern von aromatischen Dicarbonsäuren oder Blockcopolymere auf der Basis aromatischer Polycarbonate.

In allen diesen Fällen weist wenigstens ein Polymerblock ein Erweichungsverhalten auf, das als thermoplastisch anzusprechen ist (eine Glasüberganstemperatur liegt weit oberhalb der Raumtemperatur). Diese Blockcopolymere zeichnen sich aufgrund der Kombination von Thermoplast- und Kautschukeigenschaften in einem Molekül durch besondere Eigenschaften aus.

Wenig bekannt sind dagegen Blockcopolymere, bei denen jeder Polymerblock für sich einen Kautschuk darstellt.

Es wurde gefunden, daß blockartig aufgebaute Polymere auf Basis von Polysiloxanen und Polyester- und/oder Polyethersegmenten (die Eigenschaften der Homopolymeren sind als kautschukartig zu bezeichnen) besonders interessante Kautschukeigenschaften besitzen können, die eventuell auf die chemische Heterogenität der Polymerstruktur zurückzuführen sein könnten. Die neuen Blockcopolymerkautschuke lassen sich vulkanisieren und ergeben Gummimaterialien mit neuem, unerwartetem Eigenschaftsprofil.

Gegenstand der Erfindung sind somit blockartig aufgebaute Kautschukpolymere aus wiederkehrenden Struktureinheiten (I) mit Molekulargewichten von 10 000 bis 1 000 000, vorzugsweise von 10 000 bis 50 000 und von 100 000 bis 500 000

$$-\!\![A-B]\!\!- \qquad (I)$$

wobei A bifunktionelle Polysiloxansegmente der Formel

$$-\!\![(R^1)\,(R^2)\,SiO]_x\!\!- \qquad (II)$$

mit $R^1$ und $R^2$ = Aryl (insbesondere Phenyl) oder Alkyl (insbesondere Methyl) und x eine Zahl, so daß das Molekulargewicht $\geqslant 500$ ist und B bifunktionelle aliphatische Polyester- und/oder aliphatische Polyethersegmente mit Molekulargewichten $\geqslant 800$ bedeuten und die Glasübergangstemperaturen der polymeren Blöcke A und B unterhalb von 20 °C, bevorzugt unterhalb von — 10 °C, liegen.

Die Reste B der erfindungsgemäßen Polymeren sind bevorzugt Polyalkylenoxid-Reste mit $C_1$-$C_6$-Alkyleneinheiten oder bifunktionelle Polyesterreste aus der Reihe der Polykondensate aus aliphatischen $C_2$-$C_{12}$-Dicarbonsäuren und aliphatischen $C_2$-$C_{18}$-Alkylendiolen.

Ein weiterer Gegenstand der Erfindung ist ein Verfahren zur Herstellung solcher Polymerer, das dadurch gekennzeichnet ist, daß man ein aliphatisches Polyester- und/oder Polyetherdiol der Formel (III)

$$HO-B-OH \qquad (III)$$

und ein Polysiloxan der Formel (IV)

$$R^3COO-((R^1)\,(R^2)\,SiO)_x-COR^3 \qquad (IV)$$

mit $R^3 = C_1$-$C_{18}$-Alkyl, $R^2$ und $R^1$ = Alkyl (insbesondere Methyl) und/oder Aryl (insbesondere Phenyl) ; x = ganze Zahl, gegebenenfalls unter Katalyse oder mittels säurebindender Mittel, unter Abspaltung der Säure $R^3COOH$ polykondensiert, wobei das Diol III ein durchschnittliches Mokekulargewicht ($M_w$) von 800 bis 12 000 und das Polysiloxan IV ein durchschnittliches Molekulargewicht von 500 bis 20 000 aufweist.

Die in den Blockcopolymeren enthaltenen Polysiloxane sind Polydialkyl-, Polydiaryl- oder Polyarylalkylsiloxane, insbesondere Polydimethylsiloxan- oder Polymethylphenylsiloxan-Reste. Sie besitzen Blockmolekulargewichte von 500 bis 20 000, bevorzugt 800 bis 12 000, insbesondere 1 000 bis 6 000 ; sie sind weitgehend linear.

Die die Blöcke B bildenden Polyestersegmente leiten sich von aliphatischen gesättigten oder ungesättigten Dicarbonsäuren ab, z. B. von Oxalsäure, Bernsteinsäure, Adipinsäure, Azelainsäure, Sebacinsäure, Kohlensäure, Maleinsäure, Fumarsäure, Butadiendicarbonsäure. Als Diolkomponenten der Polyester eignen sich besonders Ethandiol, Butandiol, Hexandiol, Neopentylglykol, Alkylenetherdiole mit Molekulargewichten bis zu etwa 150, sowie ungesättigte aliphatische Diole wie Butendiole, und höhere ungesättigte Dicarbonsäuren mit mehr als 10 C-Atomen im Molekül. Als Blöcke B eignen sich auch Polyetherdiolreste aus der Reihe der Polyalkylenether, z. B. Polyformaldehydreste, Polytetrahydrofuranreste, Polyethylenoxidreste, Polybutylenoxidreste sowie deren Copolymere.

In den erfindungsgemäßen Blockcopolymeren aus Einheiten der Formel

—A—B—

können als Komponente B nicht nur Polyester- oder nur Polyether-Blöcke vorliegen. Es kann auch ein Teil der Blöcke B Polyester und der andere Teil Polyether sein, schließlich können auch Blöcke B vorliegen, die nebeneinander Ether- und Esterfunktionen enthalten. Setzt man zur Herstellung der Blockcopolymeren neben linearen auch verzweigte Polyester-, Polyether oder Polysiloxane ein, so werden Blockcopolymere erhalten, die verzweigte, aber unvernetzte Strukturen aufweisen.

Ebenfalls geeignet als Komponenten B sind Polyether- oder Polyesterblöcke, die selbst eine Sequenz- oder auch Blockstruktur aufweisen, z. B. Polyethylenoxid-Polypropylenoxid-Blockcopolymer- sowie Polyester-Polyether-Blockcopolymer-Bausteine.

Blockcopolymere im Sinne der Erfindung sind ebenfalls aliphatische Polymere, die die Gruppierung —A—B— enthalten ; solche Produkte sind z. B. Umsetzungsprodukte aus Polyether- oder Polyesterdiolen und Bisacylpolysiloxanen in Kombination mit Polysiloxandiolen. Dabei werden mehr oder weniger höhere Gehalte an Polysiloxan aufweisende Polymere erhalten, die eine beliebige Menge an Gruppierung —A—B— eingebaut enthalten. Die so anfallenden Polymeren besitzen dann höhere Molekulargewichte (in bezug auf das Polysiloxansegment) als 12 000.

Die erfindungsgemäßen Kautschuke sind vulkanisierbar, insbesondere mit radikalischen Initiatoren wie Peroxiden, Azoverbindungen, Percarbonaten, Perestern ; zur Vulkanisation können vorteilhaft Vernetzungshilfsmittel eingesetzt werden, z. B. polyfunktionelle ungesättigte Polyesterharze, Triallylcyanurat, Triallylphosphate, Zitronensäuretriallylester. Eine Verstärkung dieser Vulkanisate ist besonders wirksam, z. B. mit Ruß, $SiO_2$, Talkum, Fasern oder Glas, wobei dieser Effekt auf die Multiblockstruktur aus nicht chemisch identischen Polymerblöcken zurückzuführen sein dürfte.

Die erfindungsgemäßen Blockcopolymere können hergestellt werden, indem man bis-acylierte Polysiloxane der Formel IV mit Diolen aus der Reihe der Polyester oder Polyether polykondensiert. Normalerweise werden die Ausgangskomponenten der Formeln III und IV in äquimolaren Mengen eingesetzt ; es kann aber vorteilhaft sein, die eine oder andere Komponente in geringem Überschuß einzusetzen. Man kann dann das Endmolekulargewicht besser steuern und die Art der Endgruppen bestimmen. Um das Molekulargewicht schon bei der Synthese zu bestimmen, kann man Molekulargewichtsregler verwenden, z. B. monofunktionelle Verbindungen wie Monoalkohole, monoacylierte Polysiloxane, Anhydride, Ester und Säurechloride.

Die Synthese der Blockcopolymeren kann bei Temperaturen von 40 bis etwa 200 °C durchgeführt werden, insbesondere bei 80 bis 150 °C. Dabei kann ohne oder mit Lösungsmittel gearbeitet werden, z. B. mit aromatischen Kohlenwasserstoffen, Paraffinen, chlorierten Kohlenwasserstoffen, flüssigen Amiden, Estern, Ketonen und Ethern.

Eine bevorzugte Ausführungsform des Verfahrens startet ohne Lösungsmittel und fügt Lösungsmittel am Ende der Polykondensation zu.

Man benutzt bevorzugt Katalysatoren und/oder säurebindende Mittel, z. B. organische oder anorganische Basen wie Salze (Carbonate von Alkali- oder Erdalkalimetallen) oder lösliche organische Basen, wie tertiäre Amine, auch Phasentransferkatalysatoren, Phosphine, Lewisbasen sind geeignet. Unter Umständen ist bei bestimmten Reaktionstemperaturen auch das Arbeiten in Gegenwart katalytischer Mengen starker Säuren vorteilhaft, insbesondere dann, wenn man die Polykondensation unter Abdestillation der gebildeten Säuren (aus dem Ausgangsprodukt IV) durchführt.

Die Synthese läßt sich diskontinuierlich oder kontinuierlich durchführen, auch in Knetaggregaten oder Schneckenaggregaten.

Vorteilhaft ist es ebenfalls, die gesamte Menge der Ausgangssubstanz III oder IV vorzulegen (im Reaktor) und — je nach Fortschritt der Reaktion — die restliche Menge der unterschiedlichen Ausgangskomponenten IV oder III zuzudosieren.

Im Anschluß an die Synthese lassen sich die Kautschuke, gegebenenfalls unter Verdampfen der Hilfslösemittel oder Abfiltration der aus der abgespaltenen Säure gebildeten Produkte, isolieren, und durch übliche Antioxidantien oder Lichtschutzmittel stabilisieren.

Die erfindungsgemäßen Blockcopolymere stellen bei Zimmertemperatur kautschukartige Produkte dar, die — je nach eingesetzten Komponenten — transparent oder opak erscheinen.

Durch Wahl der als Block B vorhandenen Polyether- oder Polyester ist z. B. die Hydrophobie oder Hydrophilie der Produkte stark zu verändern, insbesondere wenn man die Produkte auf Basis von Polyethylenoxiden aufbaut. Die Kautschuke zeichnen sich im vulkanisierten oder unvulkanisierten Zustand durch eine überraschende Eigenschaftskombination aus Kautschukeigenschaften, Alterungsbeständigkeit, Affinität zu umgebenden Medien oder Substraten aus. Sie besitzen eine bessere Haftung als reine Polysiloxankautschuke und weisen auch schon ohne Einsatz von inerten Füllstofen gute Eigenschaften auf.

Sie eignen sich als Klebrigmacher, Klebstoffkomponenten, elastische Beschichtungen, Dichtungsmassen oder Isoliermassen.

## Beispiele

### Beispiel 1

1.000 Gewichtsteile eines Polytetrahydrofurandiols mit einem Molekulargewicht von 2.000 (bestimmt aus der OH-Zahl), 2.000 Gewichtsteile eines α,ω-bis-acetylierten Polydimethylsiloxans mit einem Molekulargewicht von 4.000 (bestimmt durch Acetylbestimmung), 220 Gew.-Teile $Na_2CO_3$ und 3.000 Gew.-Teile Chlorbenzol werden 3 Stunden bei 140 °C umgesetzt. Danach steigert man die Temperatur mit zunehmender Viskosität der Lösung auf 160 bis 180 °C. Nach einer Gesamtreaktionszeit von 7 Stunden kühlt man ab, filtriert, und dampft das Lösungsmittel ab. Das resultierende Produkt stellt einen Kautschuk dar mit einem Staudingerindex von 1,1 dl/g (in Tetrahydrofuran).

### Beispiel 2

Beispiel 1 wird wiederholt, wobei man als Diolkomponente ein Polyesterdiol aus Adipinsäure und Neopentylglykol/Hexandiol im Gewichtsverhältnis von 35 : 65 und einem Gesamtmolekulargewicht von 2.000 einsetzt. Das resultierende kautschukartige Produkt besitzt einen Staudingerindex von 0,89 dl/g (in THF).

### Beispiel 3

Beispiel 1 wird wiederholt, wobei als Diolkomponente eine Mischung aus 500 Gew.-Teilen des in Beispiel 1 beschriebenen Polytetrahydrofurans und 500 Gew.-Teilen des in Beispiel 2 beschriebenen Polyesterdiols eingesetzt wird. Das resultierende Multiblockcopolymer aus Polyether-Polyester-Polysiloxan-Sequenzen besitzt einen Staudingerindex von 1,2 dl/g in THF.

### Beispiel 4

4.000 Gew.-Teile eines bis-acetylierten Polysiloxans aus Beispiel 1 werden mit 100 Gew.-Teilen Polytetrahydrofurandiol des Beispiels 1 und 300 Gew.-Teilen $Na_2CO_3$ bei 140 °C in 3 Stunden umgesetzt. Anschließend steigert man die Temperatur auf 160 °C und dosiert innerhalb von 3 Stunden 1.900 Gew.-Teile eines α,ω-bis-acetylierten Polydimethylsiloxans mit einem Molekulargewicht von 4.000 hinzu. Diese Reaktion kann auch in einem Schneckenaggregat durchgeführt werden. Anschließend wird 2 Stunden bei 200 °C nachgerührt. Nach Auflösen des Produktes in Chlorbenzol und Aufarbeitung wie in Beispiel 1 oder 2 wird ein Kautschuk erhalten, der 1,7 Gew.-% Polyether eingebaut enthält. Das gelpermeationschromatographisch ermittelte Molekulargewicht des Polymeren ergibt sich zu 100.000.

### Beispiel 5

100 Gew.-Teile des Kautschuks aus Beispiel 2, 2 Gew.-Teile Triallylcyanurat und 0,5 Gew.-Teile tert.-Butylperpivalat werden innig vermischt. Aus der Mischung wird eine Folie hergestellt, die bei 130 °C 1/2 Stunde getempert wird. Das resultierende Material ist unlöslich in allen Lösungsmitteln und ist vulkanisiert. Solche Vulkanisate haften sehr gut auf allen Substratflächen und besitzen eine außergewöhnlich gute Tieftemperaturelastizität bei guter Verträglichkeit mit Füllstoffen und Verstärkerfasern.

**Patentansprüche**

1. Blockartig aufgebaute Kautschukpolymere, mit wiederkehrenden Struktureinheiten (I) mit Molekulargewichten von 10.000 bis 1.000.000

$$-[A-B]- \quad (I)$$

wobei A bifunktionelle Polysiloxanreste der Formel

$$[(R^1)(R^2)SiO]_x \quad (II)$$

mit $R^1$ = Aryl oder Alkyl und $R^2$ = Alkyl oder Aryl und x eine Zahl, so daß das Molekulargewicht ≥ 500 ist und B bifunktionelle aliphatische Polyester- und/oder aliphatische Polyetherreste mit Molekulargewichten ≥ 800 bedeuten und die Glasübergangstemperaturen der kautschukartigen polymeren Blöcke A und B unterhalb von 20 °C liegen.

2. Kautschukpolymere nach Anspruch 1, dadurch gekennzeichnet, daß der Rest B ein bifunktioneller Polyalkylenoxid-Rest mit $C_1$-$C_6$-Alkyleneinheiten ist.

3. Kautschukpolymere nach Anspruch 1, dadurch gekennzeichnet, daß der Rest B ein bifunktioneller Polyesterrest aus der Reihe der Polykondensate aus aliphatischen $C_2$-$C_{12}$-Dicarbonsäuren und aliphati-

schen $C_2$-$C_{18}$-Alkylendiolen darstellt.

4. Verfahren zur Herstellung von blockartig aufgebauten Kautschukpolymeren gemäß Anspruch 1, dadurch gekennzeichnet, daß man ein aliphatisches Polyester- und/oder Polyetherdiol der Formel

$$HO—B—OH \quad (III)$$

und ein Polysiloxan der Formel

$$R^3COO—((R^1)\ (R^2)SiO)_x—COR^3 \quad (IV)$$

mit $R^3$ = $C_1$-$C_{18}$-Alkyl, $R^2$ = Alkyl, Aryl, $R^1$ = Aryl, Alkyl, x = ganze Zahl, gegebenenfalls unter Katalyse oder mittels säurebindender Mittel, unter Abspaltung der Säure $R^3COOH$ polykondensiert, wobei die Verbindung der Formel (III) durchschnittliche Molekulargewichte von 800 bis 12.000 und die Verbindung der Formel IV durchschnittliche Molekulargewichte von 500 bis 20.000 aufweisen und wobei die Glasübergangstemperaturen der polymeren Blöcke $((R^1)\ (R^2)SiO)_x$ und B unterhalb von 20 °C liegen.

**Claims**

1. Rubber polymers having the structure of block polymers with molecular weights of from 10,000 to 1,000,000 containing recurrent structural units (I)

$$-[A—B]- \quad (I)$$

in which A stands for bifunctional polysiloxane groups of the formula

$$[(R^1)\ (R^2)SiO]_x \quad (II)$$

wherein $R^1$ = aryl or alkyl and $R^2$ = alkyl or aryl and x stands for a number such that the molecular weight is ≥ 500 and B stands for bifunctional aliphatic polyester and/or aliphatic polyether groups with molecular weights ≥ 800 and the glass transition temperatures of the rubberlike polymer blocks A and B are below 20 °C.

2. Rubber polymers according to claim 1, characterised in that the group B is a bifunctional polyalkylene oxide group containing $C_1$-$C_6$-alkylene units.

3. Rubber polymers according to claim 1, characterised in that the group B is a bifunctional polyester group from the series of polycondensates of aliphatic $C_2$-$C_{12}$ dicarboxylic acids and aliphatic $C_2$-$C_{18}$-alkylene diols.

4. Process for the preparation of rubber polymers having a block polymer structure according to claim 1, characterised in that an aliphatic polyester diol and/or polyether diol corresponding to the following formula

$$HO—B—OH \quad (III)$$

and a polysiloxane corresponding to the following formula

$$R^3COO—((R^1)\ (R^2)SiO)_x—COR^3 \quad (IV)$$

wherein $R^3$ = $C_1$-$C_{18}$-alkyl, $R^2$ = alkyl or aryl, $R^1$ = aryl or alkyl and x = an integer are polycondensed with elimination of the acid $R^3COOH$, optionally with the aid of catalysts or by means of acid binding agents, the compound of formula (III) having average molecular weights of from 800 to 12,000 and the compound of formula IV having average molecular weights of from 500 to 20,000 and the glass transition temperatures of the polymer blocks $((R^2)\ (R^2)SiO)_x$ and B being below 20 °C.

**Revendications**

1. Polymères du type caoutchouc, à structure formée de blocs, comportant des motifs structuraux (I) récurrents de poids moléculaires allant de 10 000 à 1 000 000

$$-[A—B]- \quad (I)$$

où A représente les restes polysiloxanne bifonctionnels de formule

$$[(R^1)\ (R^2)SiO]_x \quad (II)$$

avec $R^1$ = aryle ou alkyle et $R^2$ = alkyle ou aryle et x est un nombre choisi de manière que le poids moléculaire soit égal ou supérieur à 500, et B représente des restes bifonctionnels de polyesters aliphatiques et/ou de polyéthers aliphatiques, ayant des poids moléculaires égaux ou supérieurs à 800 et les températures de transition vitreuse des blocs polymériques A et B analogues à un caoutchouc sont inférieures à 20 °C.

2. Polymères du type caoutchouc suivant la revendication 1, caractérisés en ce que le reste B est un reste polyalkylène-oxyde bifonctionnel portant des motifs alkylène en $C_1$ à $C_6$.

3. Polymères du type caoutchouc suivant la revendication 1, caractérisés en ce que le reste B est un reste bifonctionnel de polyester de la série de polycondensats dérivés d'acides dicarboxyliques aliphatiques en $C_2$ à $C_{12}$ et d'alkylènediols aliphatiques en $C_2$ à $C_{18}$.

4. Procédé de production de polymères du type caoutchouc à structure formée de blocs suivant la revendication 1, caractérisé en ce qu'on polycondense un polyesterdiol aliphatique et/ou un polyétherdiol aliphatique de formule

$$HO{-}B{-}OH \qquad (III)$$

et un polysiloxanne de formule

$$R^3COO{-}((R^1)\ (R^2)SiO)_x{-}COR^3 \qquad (IV)$$

dans laquelle $R^3$ est un groupe alkyle en $C_1$ à $C_{18}$, $R^2$ est un groupe alkyle, aryle, $R^1$ est un groupe aryle, alkyle, x est un nombre entier, le cas échéant avec catalyse et en présence d'accepteurs d'acides, avec élimination de l'acide $R^3COOH$, le composé de formule (III) présentant des poids moléculaires moyens de 800 à 12 000 et le composé de formule (IV) présentant des poids moléculaires moyens de 500 à 20 000, et les températures de transition vitreuse des blocs polymériques $((R^1)\ (R^2)SiO)_x$ et B étant inférieures à 20 °C.